# EUROPEAN PATENT SPECIFICATION

(11) **EP 0 686 544 B1**
(45) Date of publication and mention of the grant of the patent: **24.09.1997**
(21) Application number: 95850100.9
(22) Date of filing: 24.05.1995
(51) Int. Cl.: B62D 25/16

(54) **Splash guard**
Schmutzfänger
Garde-boue

(30) Priority: 06.06.1994 FI 942650
(43) Date of publication of application: 13.12.1995
(73) Proprietor: OY PARLOK AB, 21600 Parainen (FI)
(72) Inventor: Kilpinen, Seppo Juhani, SF-21600 Parainen (FI); Turpeinen, Jarkko Matti-Juhani, SF-21600 Parainen (FI); Vainio, Veijo Heikki, SF-21600 Parainen (FI)
(74) Representative: Henningsson, Gunnar

(56) References cited:
- DE-C- 521 326
- DE-U- 8 502 729
- FR-A- 2 082 354
- GB-A- 188 236
- US-A- 2 940 773

## Description

The present invention relates to a splash guard having a front part and a back part of substantially rigid shape and a resilient central part, the shape of which can be changed, when required, for instance by pressing the splash guard downwards at its central part or adjusted when the splash guard is being installed. The splash guard consists mainly of a jacket surface conforming with the upper part of the wheel to be guarded and the edges of the jacket surfaces, which are bent radially inwards from the jacket surface. The front, central and back parts of the splash guard can be made all in one piece or from separate pieces.

There is a general tendency towards increasing the loading spaces of trucks. In semi-trailers, efforts are made to maximize the height of the loading space by positioning the turntable of the tractor vehicle as low down as possible. The distance between the back wheel of the tractor vehicle and the body of the trailer above it can then be so small that, especially when the trailer is being mounted on the tractor vehicle, a rigid splash guard has to be temporarily removed from its place, because it would otherwise be broken or deformed by the weight of the trailer.

Various solutions to this problem have been developed, the most common of which is a splash guard structure in three parts in which the uppermost or the central part of the splash guard is detachable. To detach the central part and reinstall it are undesirable additional stages of operation. As it is difficult to arrange for a suitable place for the splash guard part in the vehicle itself, it is problematic to find a place where to store the detached central part during the loading and possible shifting of the vehicle. As a consequence, there is a risk that the detached central part falls off or is left behind somewhere. Different splash guards having wholly or partly detachable, movable, or deflectable central parts are disclosed in the following German and British patent applications: DE 37 11 307, DE 39 25 773 and GB 2 151 569.

Even such splash guards of rigid shape, from which a portion of the upper part causing troubles has simply been cut away, can often be seen. The splash guard will then of course function inadequately.

Even arrangements in which the central part of the splash guard is made of resilient material, such as rubber, have been suggested. However, it is usually difficult to apply to these suggested splash guards the requirement that the edge of the splash guard should be at least 45 mm, as stipulated in the EEC directive 91/226/EEC. European patent application EP-A 0 109 577 shows one arrangement like the above mentioned and also according to the preamble of claim 1. Also Finnish patent FI 37 762 discloses a splash guard, whose central part, including the edges, is made of resilient material. Due to the reinforcements disposed on the edges, this construction has, however, a high deformation resistance, and its strength is limited.

It is an object of the present invention to provide a splash guard in which the above drawbacks and problems are minimized.

Another object of the invention is the provision of a splash guard the central part of which is resilient and at the same time durable.

A further object of the invention is the provision of a splash guard which can be installed easily and at least somewhat asymmetrically.

In order to achieve the above mentioned objects, the splash guard according to the invention is characterized by the features defined by the appended claims.

According to the invention, the above mentioned problems are solved by a splash guard whose central portion is resilient due to the pleated or accordion-folded edges. The edges on the sides of the front and back parts are preferably rigid, as in conventional splash guards.

In the splash guard according to the invention, the central part having pleated or accordion-folded edges is preferably made already at the manufacturing stage. The whole splash guard can then be made of rigid material, such as HD polyethene, by moulding.

If desired, the central part, or even only the edge of the central part, can be made in a separate stage of operation and even of different material and be joined to the other parts of the splash guard when the splash guard is being installed. The resilient edge of the central part can be made of different suitable plastic or rubber materials in various ways by moulding, such as vacuum-moulding, injection-moulding or blowing. The attachment of the edge to the jacket surface can take place by various methods known per se, such as ultrasonic spot welding, riveting, fastening with screws or by gluing.

The splash guard as well as the resilient edges are preferably made of a material which resists repeated deformations at both high and low temperatures. HD polyethene is a most suitable material for this purpose.

If desired, all parts of the splash guards can, of course, be made separately and be joined to each other in a separate stage of operation or in connection with the installation. It is also conceivable to make a conventional rigid splash guard resilient as according to the invention by cutting off the old stiff edge of the central part and fitting a new pleated edge in the place of it.

The splash guard according to the invention can advantageously also be made so that its front, central and back parts have a continuous smooth jacket surface and the rigid edges of the front and back parts are made by bending a portion of the edge of the jacket surface radially inwards. The edge of the central part is made of a separate pleated or accordion-folded piece, which is attached separately to the jacket surface of the central part.

The resilient central part of the splash guard according to the invention facilitates the installation of the splash guard unity in a narrow space, because the shape of the splash guard unity can be modified in a desired fashion by changing the positions of the rigid front and back parts in relation to the central part. The splash guard according to the invention can thus be used to form asymmetrical splash guards. On installation, the shape of the splash guard can be modified so that, once the splash guard is installed, the gap between the wheel to be guarded and the central part of the splash guard is smaller than the gap between the wheel and the front and/or back part of the splash guard. Such an asymmetrical splash guard takes less room in the vertical direction than a conventional one of a completely symmetrical shape.

The splash guard according to the invention is particularly well suited for use as a guard for the back wheel of a tractor vehicle for a semi-trailer. When the trailer is being mounted on the tractor vehicle or in the like situations, the central part of the splash guard deflects downwards, when required, to allow even the lowermost beams of the trailer to pass the splash guards.

As the upper part of the splash guard is subjected to wear by the lower part of the trailer body, the upper part of the splash guard can be protected against wear by special protecting wear parts. Rail-like wear parts or protecting parts can be formed or attached on top of the splash guards. These wear parts can either consist of continuous rail-like parts made of resilient material or of discontinuous parts made of rigid material. The discontinuity of the rails allows deflection of the splash guards.

The invention will now be described more in detail with reference to the accompanying drawings, on which
- FIG. 1: is a schematic side elevational view of a splash guard according to the invention;
- FIG. 2: is a perspective side view of the splash guard of FIG. 1;
- FIG. 2a: is an enlarged view of the pleated edge shown in FIG. 2;
- FIG. 3: is a schematic view of the splash guard according to the invention in which the upper part is bent downwardly for instance when installed in the tractor vehicle for a semi-trailer;
- FIG. 4: is a schematic view of a splash guard according to the invention which is installed asymmetrically;
- FIG. 5: is a schematic perspective view of another splash guard according to the invention; and
- FIG. 6: is a schematic view of a third splash guard according to the invention in the upper part of which there are disposed wear-resistant wear parts.

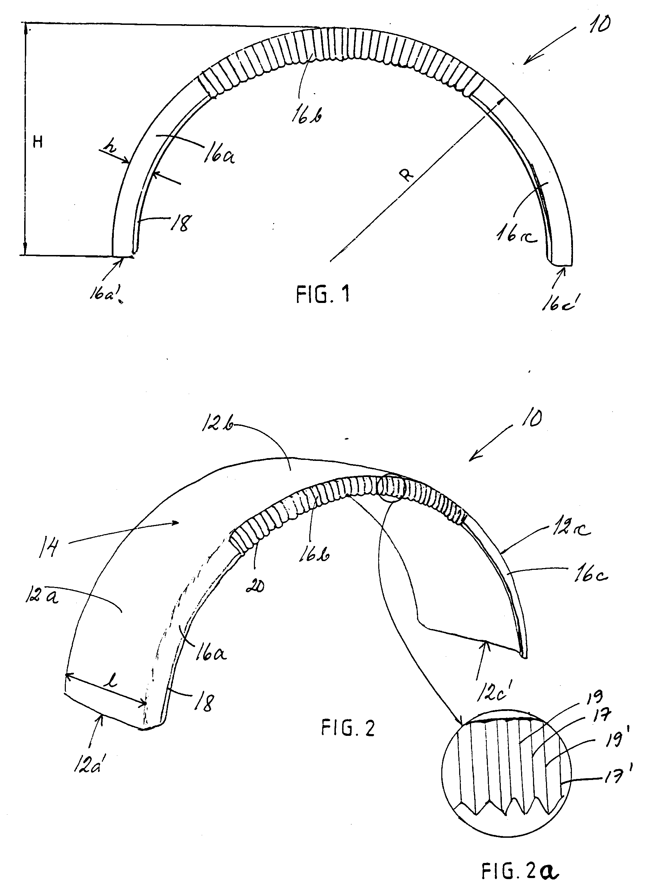

FIGS. 1 and 2 show a splash guard 10 according to the invention, comprising front, central and back parts 12a, 12b and 12c. In the splash guard shown in the figures, the splash guard has a continuous jacket surface 14. The radially inwards bent edges 16a and 16b of the front and back parts stiffen the splash guard structure. The edge 16b of the central part is a pleated or accordion-folded structure, which makes the edge resilient. The splash guard can be made all in one piece of HD polyethene by moulding.

The smooth edges of the front and back parts are additionally protected by separate edge covers 18, which can be of different colour than the splash guard itself for the sake of appearance. The lower edge 20 of the pleats of the resilient edge can be shaped so that it forms, for instance, a neat serrated edge directed downwards.

The radius R of the splash guard according to FIGS. 1 and 2 is preferably 500 - 700 mm and the length of the periphery of the splash guard measured from the lower end of the front part to the lower end of the back part is preferably about 1700 - 2300 mm. The length of the central part is then 600 - 900 mm, preferably about 800mm. The height h of the edge must be at least 45 mm according to the EEC directives, but is preferably about 60 - 100 mm. The width l of the splash guard is about 400 - 700 mm.

The edge of the resilient central part according to the invention is preferably formed from radially extending pleats or folds, the length of which substantially corresponds to the width of the edge. FIG. 2a shows an enlarged view of the circled portion of the pleated edge of FIG. 2. The distance between the peaks 19 and 19' of the pleats shown in the figure is about 10 - 20 mm and the difference of height between the peaks 19, 19' and the ridges 17, 17' is about 4 - 14 mm.

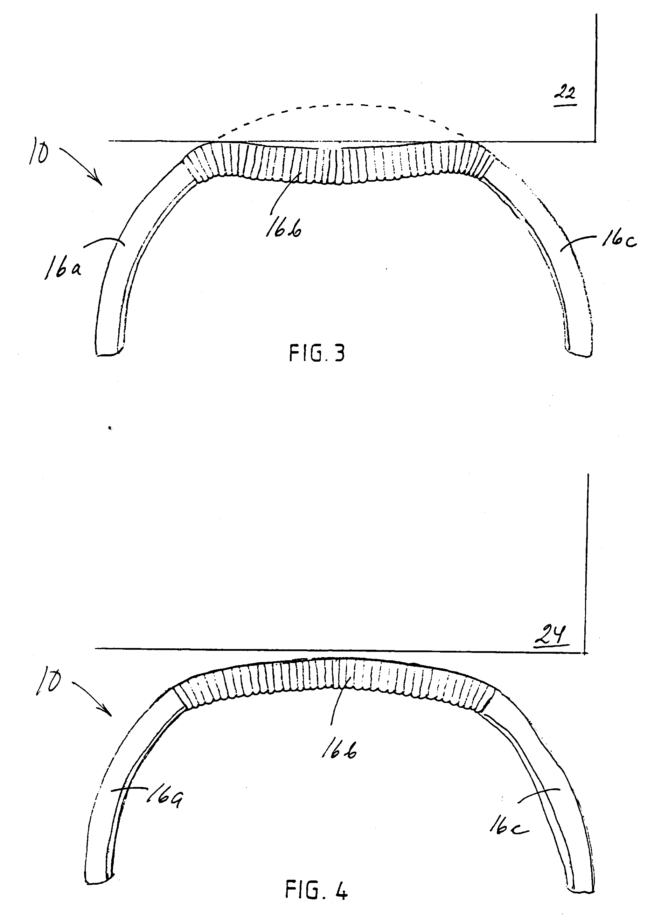

FIG. 3 shows schematically a splash guard according to the invention such as it would look installed in connection with the back wheel of a tractor vehicle for a semi-trailer, when the trailer is being pulled on the tractor vehicle. The splash guard 10 deflects thereby downwards at its central part so that the beam 22 of the trailer is able to pass the splash guard. The broken line in the figure shows the splash guard in its normal undeflected position.

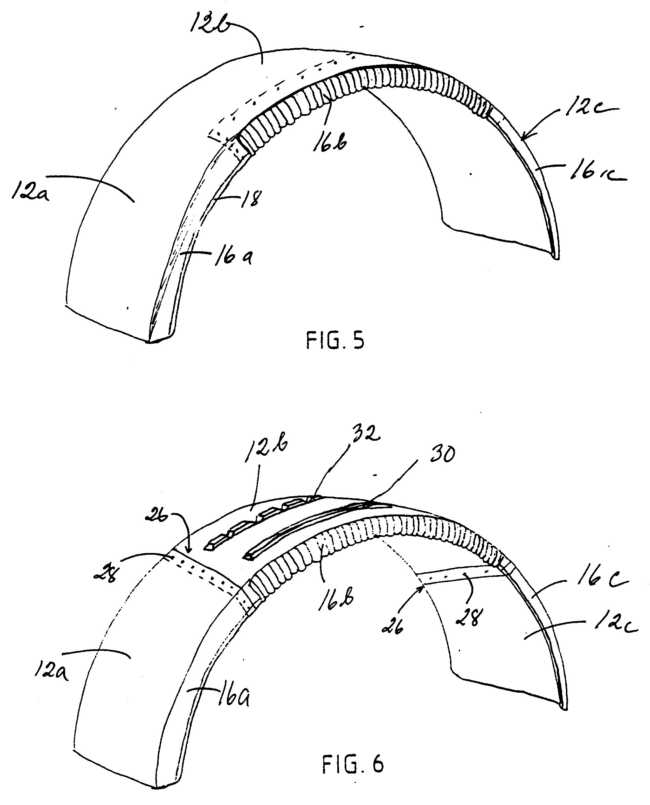

FIG. 4 shows schematically a splash guard according to the invention installed asymmetrically. The central part of the splash guard is stretched straighter so that its radius of curvature is considerably larger than the radius of curvature of the front and back edges. A symmetrical splash guard, the dimensions of which are conventional in other respects, will then fit into a narrow space, beneath an obstacle 24. At least a required minimal distance must of course be left between the wheel and the splash guard.

FIG. 5 shows a splash guard 10, the main part of which is made all in one piece. The pleated edge part 16b of the central part 12b of the splash guard is made as a separate piece and attached at a later stage, by spot welding for instance, to the main part of the splash guard.

FIG. 6 shows a splash guard which is made from separate front, central and back parts 12a, 12b, 12c, which are joined to each other at the seams or joints 26 by fastening members 28, for instance in connection with the installation.

Wear resisting wear parts 30 and 32 are further disposed on the jacket 14 of the splash guard of FIG. 6. The wear part 30 is made of resilient material and wear part 32 of rigid material. The wear part 38 is made flexible through its discontinuous structure.

The invention is not limited to the embodiments described and illustrated above, but can be varied in many ways within the scope of the invention as defined in the appended claims.

## Claims

1. A splash guard (10)
- having a front part (12a) and a back part (12c) of substantially rigid shape and a resilient central part (12b), which can reversibly change shape, for instance, when the splash guard (10) is pressed or when the splash guard (10) is being installed,
- and which splash guard (10) consists of a jacket surface (14) substantially conforming with the upper part of the wheel to be guarded, and the edges (16a, 16b, 16c) of the jacket surfaces (14), which are bent substantially radially inwards from the jacket surface (14), **characterized** in that
there is a pleated or accordion-folded edge (16b) in the central part (12b) of the splash guard (10), owing to which the central part (12b) of the splash guard is resilient.

2. The splash guard according to claim 1, **characterized** in that
- the front (12a), central (12b) and back (12c) parts of the splash guard have a continuous jacket surface (14),
- the edges (16a 16c) of the front and back parts are formed from the jacket surface (14) of the front and back parts (12a, 12c) by bending it radially inwards and that
- the edge of the central part (16b) consists of a separate pleated or accordion-folded piece which is attached to the jacket surface of the central part.

3. The splash guard according to claim 1, **characterized** in that
- the splash guard consists of separate front, central and back parts (12a 12b 12c) which are joined to each other by fastening members known per se,
- the edges of the front (12a) and back parts (12c) are formed from the jacket surfaces (14) of the front and back parts by bending them radially inwards and that
- the edge of the central part (12b) consists of a separate pleated or accordion-folded piece which is attached to the jacket surface (14) of the central part.

4. The splash guard according to claim 1, **characterized** in that
the front, central and back parts (12a, 12b, 12c) including the edges are made all in one piece by moulding of rigid material, such as HD polyethene, the pleated edge of the central part (12b) allowing the splash guard to deflect.

5. The splash guard according to claim 1, **characterized** in that
the pleated or accordion-folded edge of the central part (12b) is made by moulding, such as vacuum-moulding, injection-moulding or blowing.

6. The splash guard according to claim 1, **characterized** in that
the central part (12b) of the splash guard is made of plastic or rubber material.

7. The splash guard according to claim 1, **characterized** in that
the jacket surface (14) of the splash guard (10) and the edges of the front and the back parts (12a, 12c) are substantially smooth.

8. The splash guard according to claim 1, **characterized** in that
the splash guard (10) comprises a smooth-edged standard splash guard, from the central part (12b) of which the smooth edge has been removed and substituted by a pleated or accordion-folded edge piece.

9. A method of using the splash guard according to claim 1, **characterized** in that the splash guard (10) is used in asymmetric splash guard installations, whereby the shape of the splash guard can be modified on installation so that, once it is installed, the gap between the wheel to be guarded and the central part (12b) of the splash guard (10) is substantially smaller than the gap between the wheel and the front (12a) and/or back (12c) part of the splash guard (10), the splash guard (10) taking less room in the vertical direction than a conventional symmetrically installed splash guard.

10. A method of using the splash guard according to claim 1, **characterized** in that the splash guard (10) is used as a guard for the back wheel of a tractor vehicle for a semi-trailer, whereby the splash guard can be deflected downwards when required, for instance when the trailer is being connected to the tractor vehicle.

11. A method of using the splash guard according to claim 1, **characterized** in that at least on the central part (12c) of the jacket surface (14) of the splash guard (10) there is attached a wear part or protecting part, such as a rail-like piece, made of wear- resistant material.

## Patentansprüche

1. Kotflügel (10)
- mit einem vorderen Teil (12a) und einem hinterer Teil (12c) von wesentlich steifer Form und einem elastischen mittleren Teil (12b), der reversibel seine Form ändem kann, wenn zum Beispiel auf den Kotflügel (10) gedrückt wird oder wenn der Kotflügel (10) eingebaut wird.
- und welcher Kotflügel (10) aus einer, gegenüber dem oberen Teil des abzudeckenden Rads im wesentlichen gleichförmigen Mantelflache (14) und den Kanten (16a, 16b, 16c) der Mantelfläche (14) besteht, die wesentlich radial einwärts von der Mantelfläche (14) gebogen sind, dadurch gekennzeichnet, daß
es im mittleren Teil (12b) des Kotflügels (10) eine plissierte oder Leporello-gefalzte Kante (16b) gibt, wodurch der mittlere Teil (12b) des Kotflügels elastisch ist.

2. Kotflügel nach Anspruch 1, dadurch gekennzeichnet, daß
- der vordere (12a), mittlere (12b) und hintere (12c) Teil des Kotflügels eine ununterbrochene Mantelfläche (14) haben,
- die Kanten (16a, 16c) des vorderen und hinteren Teils aus der Mantelfläche (14) des vorderen bzw. hinteren Teils (12a, 12c) durch Biegung derselben radial einwärts ausgestaltet sind, und daß
- die Kante des mittleren Teils (16b) aus einem getrennten, plissierten oder Leporello-gefalzten Stück besteht, das an der Mantelfläche des mittleren Teils befestigt ist.

3. Kotflügel nach Anspruch 1, dadurch gekennzeichnet, daß
- der Kotflügel aus einem getrennten vorderen, mittleren und hinteren Teil (12a, 12b, 12c) besteht, die mittels als solche bekannter Organe aneinander befestigt sind,
- die Kanten des vorderen (12a) und hinteren Teils (12c) aus den Mantelflächen (14) des vorderen und hinteren Teils durch Biegung derselben radial einwärts ausgestaltet sind, und daß
- die Kante des mittleren Teils (12b) aus einem getrennten plissierten oder Leporello-gefalzten Stück besteht, das an der Mantelfläche (14) des mittleren Teils befestigt ist.

4. Kotflügel nach Anspruch 1, dadurch gekennzeichnet, daß
der vordere, mittlere und hintere Teil (12a, 12b, 12c) einschließlich der Kanten sämtlich einstückig durch Formen aus steifem Material, wie z.B. HD-Polyäthylen gefertigt sind, wobei die plissierte Kante des mittleren Teils (12b) die Biegung des Kotflügels zuläßt.

5. Kotflügel nach Anspruch 1, dadurch gekennzeichnet, daß
die plissierte oder Leporello-gefalzte Kante des mittleren Teils (12b) durch Formverfahren, wie z.B. Vakuumformen, Spritzgießen oder Blasformen gefertigt ist.

6. Kotflügel nach Anspruch 1, dadurch gekennzeichnet, daß
der mittlere Teil (12b) des Kotflügels aus Kunststoff- oder Gummimaterial gefertigt ist.

7. Kotflügel nach Anspruch 1, dadurch gekennzeichnet, daß
die Mantelfläche (14) des Kotflügels (10) und die Kanten des vorderen und hinteren Teils (12a, 12c) wesentlich glatt sind.

8. Kotflügel nach Anspruch 1, dadurch gekennzeichnet, daß
der Kotflügel (10) einen glattkantigen Standard-Kotflügel umfaßt, von dessen mittlerem (12b) Teil die glatte Kante entfernt und durch ein plissiertes oder Leporello-gefalztes Kantenstück ersetzt worden ist.

9. Verfahren zur Benutzung des Kotflügels nach Anspruch 1,
dadurch gekennzeichnet, daß der Kotflügel (10) in asymmetrischen Kotflügelinstallationen eingesetzt wird, wobei die Form des Kotflügels in der Installation derart geändert werden kann, daß, sobald er eingebaut ist, der Zwischenraum zwischen dem abzudeckenden Rad und dem mittleren Teil (12b) des Kotflügels (10) wesentlich kleiner ist als der Zwischenraum zwischen dem Rad und dem vorderen (12a) und/oder hinteren (12c) Teil des Kotflügels (10), wobei der Kotflügel (10) in Vertikalrichtung weniger Platz beansprucht als ein konventioneller, symmetrisch eingebauter Kotflügel.

10. Verfahren zur Benutzung des Kotflügels nach Anspruch 1,
dadurch gekennzeichnet, daß der Kotflügel (10) als Abdeckung für das Hinterrad der Zugmaschine eines Sattelschleppers benutzt wird, wobei der Kotflügel bei Bedarf nach unten gebogen werden kann, zum Beispiel wenn der Auflieger mit der Zugmaschine gekoppelt wird.

11. Verfahren zur Benutzung des Kotflügels nach Anspruch 1,
dadurch gekennzeichnet, daß zumindest am mittleren Teil (12c) der Mantelfläche (14) des Kotflügels (10) ein Verschleiß- oder Schutzteil, wie etwa ein schienenähnliches Stück befestigt ist, das aus verschleißfestem Material gefertigt ist.

## Revendications

1. Un garde-boue (10)
- comprenant une partie avant (12a) et une partie arrière (12c) de forme sensiblement rigide et une partie centrale (12b) élastique, qui peut être de forme modifiable réversible, par exemple lorsque le garde-boue (10) est matricé ou lorsque le garde-boue (10) est installé,
- ledit garde-boue (10) comprenant une surface formant enveloppe (14) épousant sensiblement la forme de la partie supérieure de la roue à protéger, et les bords (16a, 16b, 16c) des surfaces de l'enveloppe (14) sont cintrés sensiblement radialement vers l'intérieur à partir de la surface de l'enveloppe (14), caractérisé en ce que
il est prévu un bord (16b) plié en accordéon ou plissé dans la partie centrale (12b) du garde-boue (10), de sorte que la partie centrale (12b) du garde-boue est élastique.

2. Le garde-boue selon la revendication 1, caractérisé en ce que
- les parties avant (12a), centrale (12b) et arrière (12c) du garde-boue ont une surface d'enveloppe (14) continue,
- les bords (16a, 16c) des parties avant et arrière sont formés à partir de la surface d'enveloppe (14) des parties avant et arrière (12a, 12c) en les repliant radialement vers l'intérieur et que
- le bord de la partie centrale (16b) consiste en un élément indépendant, plissé ou plié en accordéon, qui est fixé à la surface d'enveloppe de la partie centrale.

3. Le garde-boue selon la revendication 1, caractérisé en ce que
- le garde-boue est constitué par des parties avant, centrale et arrière (12a, 12b, 12c) indépendantes qui sont assemblées mutuellement par des moyens de fixation connus en soi,
- les bords des parties avant (12a) et arrière (12c) sont formés à partir des surfaces d'enveloppe (14) des parties avant et arrière en les pliant radialement vers l'intérieur, et que
- le bord de à partie centrale (12b) est constitué par un élément indépendant, plissé ou plié en accordéon, qui est fixé à la surface d'enveloppe (14) de la partie centrale.

4. Le garde-boue selon la revendication 1, caractérisé en ce que
les parties avant, centrale et arrière (12a, 12b, 12c) comprenant les bords sont toutes réalisées monobloc par moulage à partir d'un matériau rigide tel que du polyéthylène à haute densité, le bord plissé de la partie centrale (12b) permettant la déformation du garde-boue.

5. Le garde-boue selon la revendication 1, caractérisé en ce que
le bord plissé ou plié en accordéon de la partie centrale (12b) est réalisé par moulage, par exemple par moulage sous vide, moulage par injection ou soufflage.

6. Le garde-boue selon la revendication 1, caractérisé en ce que
la partie centrale (12b) du garde-boue est réalisée en matériau plastique ou de caoutchouc.

7. Le garde-boue selon la revendication 1, caractérisé en ce que
la surface d'enveloppe (14) du garde-boue (10) et les bords des parties avant et arrière (12a, 12c) sont sensiblement lisses.

8. Le garde-boue selon la revendication 1, caractérisé en ce que
le garde-boue (10) comprend un garde-boue standard à bord lisse, dont le bord lisse à partir de la partie centrale (12b) a été enlevé et remplacé par un élément de bord plissé ou plié en accordéon.

9. Un procédé d'utilisation du garde-boue selon la revendication 1, caractérisé en ce que le garde-boue (10) est utilisé dans des installations de garde-boue asymétriques, de manière que la forme du garde-boue puisse être modifiée lors de l'installation de sorte que lorsqu'il est installé, l'intervalle entre la roue à protéger et la partie centrale (12b) du garde-boue (10) est sensiblement inférieur à l'intervalle entre la roue et la partie avant (12a) et/ou arrière (12c) du garde-boue, le garde-boue (10) prenant moins de place dans la direction verticale qu'un garde-boue classique, à montage symétrique.

10. Un procédé d'utilisation du garde-boue selon la revendication 1, caractérisé en ce que le garde-boue (10) est utilisé comme protection pour la roue arrière d'un véhicule tracteur de semi-remorque, de manière que le garde-boue puisse être déformé vers le bas en cas de besoin, par exemple, lorsque la remorque est attelée au véhicule tracteur.

11. Un procédé d'utilisation du garde-boue selon la revendication 1, caractérisé en ce que, au moins, sur la partie centrale (12c) de la surface de l'enveloppe (14) du garde-boue (10), il est fixé un élément de protection ou d'usure tel qu'un élément en forme de rail, réalisé en un matériau résistant à l'usure.
